(19) Europäisches Patentamt
European Patent Office
Office européen des brevets

(11) Numéro de publication: **0 298 883**
**A1**

(12) # DEMANDE DE BREVET EUROPEEN

(21) Numéro de dépôt: **88420235.9**

(22) Date de dépôt: **04.07.88**

(51) Int. Cl.⁴: **C 08 G 69/44**

(30) Priorité: **10.07.87 FR 8710178**

(43) Date de publication de la demande:
**11.01.89 Bulletin 89/02**

(84) Etats contractants désignés:
**AT BE CH DE ES FR GB IT LI LU NL SE**

(71) Demandeur: **RHONE-POULENC CHIMIE**
**25, quai Paul Doumer**
**F-92408 Courbevoie Cédex (FR)**

(72) Inventeur: **Quentin, Jean-Pierre**
**35 D, rue Joliot-Curie**
**F-69005 Lyon (FR)**

(74) Mandataire: **Trolliet, Maurice et al**
**RHONE-POULENC INTERSERVICES Service Brevets**
**Chimie Centre de Recherches de Saint-Fons B.P. 62**
**F-69192 Saint-Fons Cédex (FR)**

Revendications pour l'Etat contractant suivant: ES.

(54) **Copolyesteramides aromatiques thermotropes.**

(57) La présente invention concerne des copolyesteramides aromatiques thermotropes conformables de masse moléculaire élevée.

Ces copolyesteramides présentent une structure comprenant les unités de récurrence de formules (I), éventuellement (II), (III) et (IV),
(I) désignant :

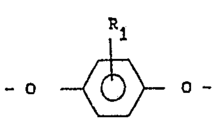

avec $R_1$ pouvant être un radical méthyle et/ou éthyle et/ou un atome de chlore et/ou un atome de brome ; (II) désignant :

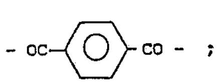

(III) désignant :

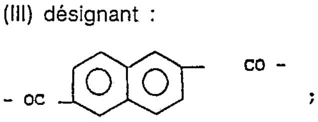

et IV désignant :

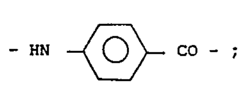

et ils possèdent une température d'écoulement allant de 200 à 350° C.

Ces copolyesteramides permettent d'obtenir des objets moulés, fils et films doués de bonnes propriétés mécaniques.

EP 0 298 883 A1

## Description

### COPOLYESTERAMIDES AROMATIQUES THERMOTROPES

La présente invention concerne des copolyesteramides aromatiques thermotropes conformables dérivant d'une part d'au moins une hydroquinone substituée (ou un dérivé), d'autre part d'un mélange de diacides carboxyliques aromatiques (ou leurs dérivés) et enfin d'au moins un aminoacide carboxylique aromatique (ou un dérivé).

On connait déjà des polyesters thermotropes dérivant d'une part d'un ou plusieurs diphénols et d'autre part d'un ou plusieurs diacides carboxyliques aromatiques et/ou cycloaliphatiques. Des polyesters de ce genre sont divulgués par exemple dans le brevet américain US-A-4.118.372 et parmi les polyesters qui y sont décrits, ceux obtenus notamment à partir d'une hydroquinone substituée (ou un dérivé), d'acide téréphtalique (ou un dérivé) et de dicarboxy-2,6 naphtalène (ou un dérivé) sont des espèces présentant un intérêt certain.

Un objectif visé par la présente invention est de proposer des polyesters thermotropes qui peuvent être préparés de manière plus économique que ne le sont les copolyesters particuliers précités, du fait de l'emploi d'hydroquinone substituée (ou son dérivé) et de dicarboxy-2,6 naphatlène (ou son dérivé), qui sont des réactifs onéreux, en plus faible concentration dans le mélange des réactifs de départ et de l'ajout d'un réactif supplémentaire approprié moins couteux et facilement disponible industriellement.

Un autre objectif visé par la présente invention est de chercher à surmonter un inconvénient des copolyesters particuliers précités résidant dans l'obtention de valeurs de propriétés thermo-mécaniques insuffisantes qui demandent à être améliorées, notamment les modules de flexion et la conservation des valeurs des modules de torsion en fonction de la température.

Il a maintenant été trouvé que l'on pouvait arriver à la satisfaction de ces objectis grâce à l'emploi d'un réactif supplémentaire consistant dans l'acide paraaminobenzoïque ou un dérivé.

Plus précisément, la présente invention concerne des copolyesteramides aromatiques thermotropes conformables, caractérisés par les points suivants :

- ils comprennent des unités de récurrence de formules (I), éventuellement (II), (III) et (IV) :

(I) désignant la structure :

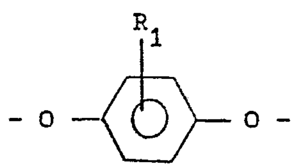

dans laquelle $R_1$ représente un radical méthyle ou éthyle ou un atome de chlore ou de brome, les unités (I) pouvant être identiques ou différentes entre elles,

(II) désignant la structure :

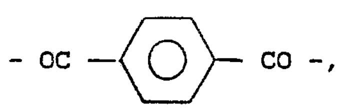

(III) désignant la structure :

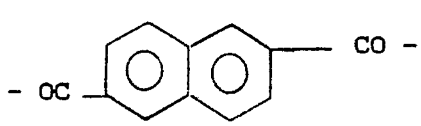

,

(IV) désignant la structure :

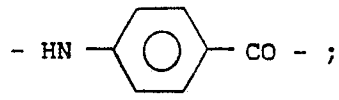

- le rapport molaire des unités (I) par rapport à la somme des unités (II) + (III) se situe dans l'intervalle allant de 0,95 à 1,05 ;
- la quantité des unités (II) dans le mélange (II) + (III) se situe dans l'intervalle allant de 0 à 80 % en mole et celle des unités (III), par rapport à la même référence, se situe dans l'intervalle allant de 100 à 20 % en mole ;
- la quantité des unités (IV), exprimée par rapport à la quantité des unités (I), se situe dans l'intervalle allant de 5 à 100 % en mole ;
- et ces copolyesteramides possèdent une température d'écoulement se situant dans l'intervalle allant de 200 à 350° C.

Les unités de formule (I) sont issues d'une hydroquinone monosubstituée (par un radical méthyle ou éthyle ou par un atome de chlore ou de brome) ou de son diester. Il doit être entendu que les unités (I) peuvent être issues également d'un mélange de deux ou de plus de deux hydroquinones monosubstituées ou de leurs diesters, appartenant au groupe de composés visés dans la présente invention.

Les unités de formule (II) proviennent d'acide téréphtalique ou d'un dérivé comme par exemple un dihalogénure ou un diester.

Les unités de formule (III) proviennent du dicarboxy-2,6 naphtalène ou d'un dérivé comme par exemple un dihalogénure ou un diester.

Les unités de formule (IV) sont issues d'acide paraaminobenzoïque ou d'un dérivé comme par exemple le composé obtenu par acylation de la fonction amine ou le composé obtenu par estérification de la fonction acide ou un halogénure de la fonction acide.

Selon une modalité préférentielle, les copolyesteramides de la présente invention présentent une structure telle que définie ci-avant dans laquelle :
- la quantité des unités (II) dans le mélange (II) + (III) se situe dans l'intervalle allant de 20 à 70 % en mole et celles des unités (III), par rapport à la même référence, va de 80 à 30 % en mole ;
- et la quantité des unités (IV), exprimée par rapport à la quantité des unités (I), se situe dans l'intervalle allant de 10 à 60 % en mole.

Parmi les copolyesteramides aromatiques appartenant à ce groupe préféré, ceux qui conviennent tout particulièrement bien sont les polymères présentant une structure dans laquelle les unités (I) sont identiques entre elles avec le substituant $R_1$ représentant un radical méthyle ou un atome de chlore ; de pareilles unités (I) sont issues de méthylhydroquinone ou de chlorohydroquinone ou de leurs diesters .

Les copolyesteramides selon l'invention présentent une masse moléculaire suffisamment élevée pour leur permettre d'être mis en forme au moyen de tout procédé connu tel que moulage, filage et filmage. Ces polymères sont insolubles dans les solvants habituels utilisés pour les mesures de viscosité inhérente comme par exemple les mélanges parachlorophénol/dichloro-1,2 éthane. C'est pourquoi la viscosité inhérente n'a pas pu être déterminée ici.

A propos de la température d'écoulement, elle se situe plus préférentiellement dans l'intervalle allant de 260 à 330 ° C. On entend par "température d'écoulement", la température à laquelle les bords d'un échantillon sous forme de copeau de polymère ou de fibre coupée commencent à s'arrondir. Cette température est déterminée par observation visuelle de l'échantillon sur une lamelle couvre-objet pour une vitesse de montée en température appropriée, généralement de l'ordre de 10 à 20° C/ minute, observation faite à l'aide d'un microscope équipé d'une platine chauffante connu dans le commerce sous la marque THERMOPAN.

Les copolyesteramides conformes à la présente invention englobent aussi les polymères qui peuvent contenir en outre dans leur structure des unités aromatiques génératrices de fonctions esters et amides (unités dioxy et/ou unités dicarbonyle et/ou unités mixtes amino secondaire/carbonyle) ayant une structure autre que celle des unités (I), (II), (III) et (IV), la quantité totale de ces unités supplémentaires étant au plus égale à 10 % en mole par rapport à la quantité des unités (I). Une liste non limitative de ces unités supplémentaires est la suivante :

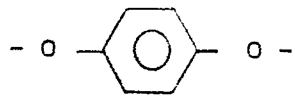 (I')

et/ou 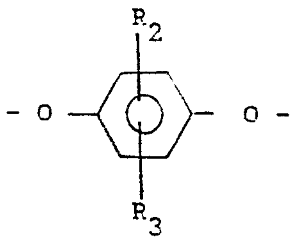 (I") où $R_2$

et $R_3$, qui peuvent être identiques ou différents, ont chacun la définition donnée ci-avant pour $R_1$, les unités (I") pouvant être identiques ou différentes entre elles,

et/ou 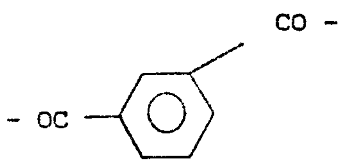 (II')

et/ou 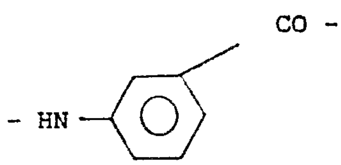 (IV')

Les unités de formule (I') sont issues de l'hydroquinone non substituée ou de son diester.

Les unités de formule (I") sont issues d'une hydroquinone disubstituée ou de son diester ou d'un mélange d'hydroquinones disubstituées ou de leurs diesters.

Les unités de formule (II') sont issues de l'acide isophtalique ou d'un dérivé comme par exemple un dihalogénure ou un diester.

Les unités de formule (IV') sont issues d'acide métaaminobenzoïque ou d'un dérivé.

Il doit être bien entendu que les quantités totales de toutes les unités dioxy et de toutes les unités dicarbonyle alors présentes dans le copolyesteramide devront être telles que le rapport molaire de la totalité des unités dioxy par rapport à la somme totalité des unités dioxy + totalité des unités dicarbonyle se situe dans l'intervalle allant de 0,95 à 1,05.

Les copolyesteramides selon la présente invention présentent la caractéristique importante d'être thermotropes, c'est à dire qu'ils sont capables de former des masses fondues anisotropes qui sont faciles à conformer par filage, filmage ou moulage : la thermotropie est facile à mettre en évidence lorsqu'on observe le polymère à l'état fondu dans un système optique équipé de deux polariseurs croisés (90°) : il se produit pour les échantillons anisotropes une biréfringence et une transmission de la lumière polarisée à travers les polariseurs croisés. La mise en évidence de l'anisotropie des polyesteramides selon la présente invention a été effectuée par la méthode thermo-optique TOT décrite dans le brevet français 2 270 282.

De ce fait, les masses fondues à l'état anisotrope possèdent une orientation propre et un degré relativement élevé d'organisation qui se retrouvent sur les articles conformés tels que les fils, films et objets moulés leur conférant (déjà à l'état brut) des propriétés améliorées telles que module, ténacité, qu'on n'observe pas habituellement sur les produits bruts isotropes.

Il convient de noter que ces masses fondues anisotropes possèdent une plage d'anisotropie étalée sur au moins 30° C. On entend par "plage d'anisotropie", l'intervalle de températures qui part de la température à laquelle apparaît la biréfringence et la transmission de la lumière à travers les deux polariseurs croisés et qui se situe au-dessus de ladite température, intervalle ayant une borne supérieure variable et dans lequel la masse fondue est anisotrope sans aucun risque de décomposition du copolyesteramide.

Les copolyesteramides selon la présente invention peuvent être mis en forme au moyen de tout procédé connu tel que moulage, filage, filmage et en opérant bien entendu dans la plage d'anisotropie pour donner des

articles ayant un bon niveau de propriétés. La présence, dans la structure des copolyesters conformes à la présente invention, des unités mixtes amino secondaire/carbonyle (IV) permet de faire baisser le prix moyen des matières premières et par conséquent de minimiser le coût de production des articles en formes issus de ces copolyesteramides. Par ailleurs, dans le cas par exemple d'articles moulés, on peut noter (par rapport à ce qui se passe en absence de pareilles unités mixtes) une amélioration sensible des valeurs de certaines propriétés mécaniques notamment les valeurs des modules en flexion et de torsion et on peut noter en outre une meilleure conservation des propriétés mécaniques en fonction de la température.

Il est possible d'augmenter encore les propriétés mécaniques, notamment celles des articles minces, par traitement thermique à température élevée, inférieure à la température de fusion du polymère.

Suivant l'application qui en sera faite, les copolyesteramides selon l'invention peuvent recevoir des additifs, tels que notamment des colorants, des agents de stabilisation contre l'action de la lumière, de l'oxygène et de la chaleur, des charges de remplissage ou de renforcement, des agents ignifugeants.

Les copolyesteramides conformes à la présente invention peuvent être préparés par différentes procédés connus de polymérisation.

Par exemple, ils peuvent être préparés en faisant réagir :

1. - la méthyl - et/ou l'éthyl - et/ou la chloro - et/ou la bromohydroquinone, en mélange éventuellement avec un autre (ou d'autres) diphénol(s) comme par exemple de l'hydroquinone non substituée et/ou une ou plusieurs hydroquinone(s) disubstituée(s) par les groupes précités avec

2. - éventuellement un dérivé de l'acide téréphtalique pris seul ou en mélange éventuellement avec un dérivé d'un autre diacide carboxylique aromatique comme par exemple l'acide isophtalique, et avec

3. - un dérivé du dicarboxy-2,6 naphtalène, et avec

4. - un dérivé de l'acide paraaminobenzoïque au niveau de la fonction acide, pris seul ou en mélange éventuellement avec un dérivé du même type qu'un autre aminoacide aromatique comme par exemple l'acide métaaminobenzoïque, ledit dérivé d'acide étant soit un halogénure comme par exemple un chlorure, soit un ester d'aryle comme par exemple un ester de phényle, de tolyle ou de naphtyle (ledit dérivé étant bien entendu un dihalogénure ou un diester dans le cas d'un diacide carboxylique). La réaction s'effectue en général en présence d'un catalyseur tel que ceux cités dans le brevet canadien 735 543.

Dans ce procédé, les réactifs sont utilisés dans des proportions telles que :

- le rapport molaire diphénol(s)/dérivés de diacides se situe dans l'intervalle allant de 0,95 à 1,05,
- la quantité de dérivé d'acide téréphtalique dans le mélange dérivé d'acide téréphtalique + dérivé du dicarboxy-2,6 naphtalène se situe dans l'intervalle allant de 0 à 80 % en mole, et de préférence allant de 20 à 70 % en mole,
- la quantité de dérivé d'acide paraaminobenzoïque se situe dans l'intervalle allant de 5 à 100 % en mole par rapport à la quantité d'hydroquinone(s) mono substituée(s), et de préférence allant de 10 à 60 % en mole,
- la quantité totale des réactifs engagés autres que le (ou les) hydroquinone(s) monosubstituée(s), le dérivé d'acide téréphtalique, le dérivé du dicarboxy-2,6 naphtalène et le dérivé d'acide paraaminobenzoïque est au plus égale à 10 % en mole par rapport à la quantité d'hydroquinone(s) monosubstituée(s).

Les copolyesteramides obtenus d'après ce premier procédé présentent généralement des groupes terminaux d'un côté du type H phénolique et/ou H de $NH_2$ et, de l'autre côté, du type halogéno ou aryloxy.

Il est également possible de préparer les copolyesteramides selon l'invention par estérification et amidification directes entre le (ou les) diphénol(s) envisagés, les diacides carboxyliques aromatiques et le (ou les) aminoacide(s) aromatique(s). Les copolyesteramides ainsi obtenus présentent généralement des groupes terminaux du type H phénolique et/ou H de $NH_2$ et OH acide.

Mais de préférence, on fait appel à un troisième procédé mettant en oeuvre une réaction d'acidolyse. Conformément à ce procédé préféré on fait réagir :

1. - un diester de méthyl - et/ou d'éthyl -et/ou de chloro - et/ou de bromohydroquinone en mélange éventuellement avec un (ou des) diester(s) d'un autre (ou d'autres) diphénol(s) comme par exemple de l'hydroquinone non substituée et/ou une ou plusieurs hydroquinone(s) disubstituée(s) par les groupes précités, avec

2. - éventuellement de l'acide téréphtalique pris seul ou en mélange éventuellement avec un autre diacide carboxylique aromatique comme par exemple l'acide isophtalique, et avec

3. - le dicarboxy-2,6 naphtalène, et avec

4. - un dérivé acylé de l'acide paraaminobenzoïque au niveau de la fonction amine, pris seul on en mélange éventuellement avec un dérivé acylé du même type d'un autre aminoacide aromatique comme par exemple l'acide métaaminobenzoïque, ledit diester de diphénol étant formé à partir d'un acide alcanoïque ayant de 2 à 6 atomes de carbone comme par exemple un ester acétique et ledit dérivé acylé d'aminoacide au niveau de la fonction amine étant formé à partir d'un anhydride ou d'un halogénure comme par exemple un chlorure dérivé d'un acide alcanoïque ayant de 2 à 6 atomes de carbone comme par exemple un dérivé acétylé.

La réaction s'effectue en général là aussi en présence d'un catalyseur tel que notamment l'acétate de sodium, de magnésium, de manganèse et de zinc, le titanate de butyle, le trioxyde d'antimoine. Elle débute en général à une température comprise entre 260° C et 310° C, puis l'acide formé distille. Après avoir recueilli environ 80 % de la théorie d'acide à distiller, on élève progressivement la température jusqu'à une valeur supérieure à la température choisie pour débuter la réaction et se situant dans l'intervalle allant de 280° C à 330° C, tout en diminuant progressivement la pression. Lorsque la distillation de l'acide est terminée, la

polycondensation est continuée sous un vide important pendant une durée pouvant aller jusqu'à 30 minutes ou davantage.

Dans ce procédé par acidolyse, les réactifs sont utilisés dans des proportions telles que :
- le rapport molaire diester(s) de diphénol(s)/diacides totaux se situe dans l'intervalle allant de 0,95 à 1,05,
- la quantité d'acide téréphtalique dans le mélange acide téréphtalique + dicarboxy-2,6 naphtalène se situe dans l'intervalle allant de 0 à 80 % en mole, et de préférence allant de 20 à 70 % en mole,
- la quantité de dérivé acylé d'acide paraaminobenzoïque au niveau de la fonction amine se situe dans l'intervalle allant de 5 à 100 % en mole par rapport à la quantité de diester(s) d'hydroquinone(s) monosubstituée(s), et de préférence allant de 10 à 60 % en mole,
- la quantité totale des réactifs engagés autres que le (ou les) diester(s) d'hydroquinone(s) monosubstituée(s), l'acide téréphtalique, le dicarboxy-2,6 naphtalène et le dérivé acylé de l'acide paraaminobenzoïque est au plus égale à 10 % en mole par rapport à la quantité de diester(s) d'hydroquinone(s) monosubstituée(s).

Les copolyesteramides obtenus d'après ce troisième procédé présentent généralement des groupes terminaux d'un côté du type alkoxy et/ou acylamino et, de l'autre côté, du type OH acide.

Les exemples non limitatifs qui suivent montrent comment la présente invention peut être mise en oeuvre pratiquement.

Dans ces exemples, un certain nombre de contrôles des copolyesteramides obtenus sont effectués. On indique ci-après les modes opératoires et/ou les normes selon lesquels ces contrôles sont effectués :

- module en torsion :

Il est déterminé à différentes températures au pendule automatique de torsion sous une fréquence de l'ordre de 1 Hertz selon la norme ISO R 537 méthode B, les éprouvettes étant conditionnées à EH 50 selon la norme NF T 51 014. Les résultats sont exprimés en MPa.

- Essai de traction :

La résistance et le module en traction sont mesurés à 23° C selon les indications de la norme NF T 51 034 sur des éprouvettes de type haltère ayant une largeur de 4 mm et une épaisseur de 2 mm, conditionnées à EH 50. Les résultats sont exprimés en MPa.

- Module en flexion :

Cette détermination est faite à 23° C selon les indications de la norme NF T 51 001 sur des éprouvettes de type barreau de 80 x 8 x 4 mm, conditionnées à EH 50. Les résultats sont exprimés en MPa.

- Résistance au choc CHARPY :

Elle est déterminée à 23° C selon les indications de la norme NF T 51 035 sur des éprouvettes de type barreau de 60 x 10 x 4 mm comportant des entailles en U, conditionnées à EH 50. Les résultats sont exprimés en $KJ/m^2$.

EXEMPLE 1 :

Dans un réacteur de polycondensation agité et chauffé, muni d'un dispositif de distillation et de balayage par un gaz inerte, on introduit les réactifs et catalyseur suivants :

1. - diacétate de chlorohydroquinone : 45,70 g
(rapport molaire (1)/(2) + (3) = 1)
2. - acide téréphtalique : 22,08 g
(66 % en mole dans le mélange (2) + (3))
3. - dicarboxy-2,6 naphtalène : 14,47 g
(34 % en mole dans le mélange (2) + (3))
4. - acide para-acétamidobenzoïque : 7,16 g
(20 % en mole par rapport à (1))
5. - acétate de magnésium : 0,045 g
(500 ppm)

Le réacteur est purgé à l'azote, puis chauffé par un bain métallique réglé à 300° C. L'acide acétique commence à distiller après quelques minutes, la première goutte d'acide qui distille correspondant au temps zéro. Après 120 minutes, on receuille 22,2 $cm^3$ d'acide acétique (88,4 % de la théorie). On élève ensuite progressivement la température du bain métallique jusqu'à 330 ° C en 14 minutes ; dans le même temps, la pression est diminuée de 1 010.$10^2$ Pa à 13,3 $10^2$ Pa. On poursuit le chauffage à 330° C pendant 42 minutes en diminuant la pression jusqu'à 0,39.$10^2$ Pa pendant le même temps. Le volume total d'acide acétique distillé est de 24 $cm^3$ (soit 95,6 % de la théorie).

Le polymère obtenu est gris clair et d'aspect fibreux. La température d'écoulement est de 300° C. La plage d'anisotropie va de 300° C jusqu'à plus de 360° C.

Les résultats des mesures de traction, de flexion et de choc sont indiqués dans le tableau 1 suivant.

A propos des éprouvettes moulées permettant de mesurer les propriétés mécaniques, elles sont préparées à l'aide d'une presse à vis connue dans le commerce sous la marque KAP. Pour ce faire, le copolyesteramide

obtenu est broyé, puis séché 4 heures à 150° C et les granulés formés sont moulés par injection dans les conditions suivantes :
- température du fondoir : 320° C
- température du moule : 25° C
- pression d'injection : 22,5 MPa.

A titre d'essai comparatif (essai A), on a reproduit les mêmes opérations que celles décrites ci-avant mais en n'utilisant pas cette fois d'acide para-acétamidobenzoïque. Les réactifs et catalyseur mis en oeuvre sont donc les suivants :

1. - diacétate de chlorhydroquinone : 45,70 g
(rapport molaire (1)/(3) + (3) = 1)
2. - acide téréphtalique : 22,08 g
(66 % en mole dans le mélange (2) + (3))
3. - dicarboxy-2,6 naphtalène : 14,47 g
(34 % en mole dans le mélange (2) + (3))
4. - acétate de magnésium : 0,041 g
(500 ppm)

Dans cet essai, un volume de 22,4 $cm^3$ d'acide acétique est récupéré (soit 97,8 % de la théorie). Le polymère obtenu est gris et d'aspect fibreux. La température d'écoulement est de 290° C. La plage d'anisotropie va de 300° C jusqu'à plus de 360° C.

EXEMPLE 2

Dans le même appareil que celui décrit à l'exemple 1, on introduit :

1. - diacétate de chlorohydroquinone : 45,70 g
(rapport molaire (1)/(2) + (3) = 1)
2. - acide téréphtalique : 22,08 g
(66 % en mole dans le mélange (2) + (3))
3. - dicarboxy-2,6 naphtalène : 14,47 g
(34 % en mole dans le mélange (2) + (3))
4. - acide para-acétamidobenzoïque : 14,32 g
(40 % en mole par rapport à (1))
5. - acétate de magnésium : 0,048 g
(500 ppm)

On opère ensuite comme indiqué à l'exemple 1. Un volume de 27 $cm^3$ d'acide acétique est récupéré (98,5 % de la théorie). Le polymère obtenu est gris clair et d'aspect fibreux. La température d'écoulement est de 300° C. La plage d'anisotropie va de 300° C jusqu'à plus de 360° C. Les résultats des mesures de traction, de flexion et de choc sont indiqués dans le tableau 1 suivant.

EXEMPLE 3

Dans le même appareil que celui décrit à l'exemple 1, on introduit :

1. - diacétate de chlorohydroquinone : 45,70 g
(rapport molaire (1)/(2) + (3) = 1)
2. - acide téréphtalique : 16,60 g
(50 % en mole dans le mélange (2) + (3))
3. - dicarboxy-2,6 naphtalène : 21,60 g
(50 % en mole dans le mélange (2) + (3))
4. - acide para-acétamidobenzoïque : 7,16 g
(20 % en mole par rapport à (1))
5. - acétate de magnésium : 0,046 g
(500 ppm)

On opère ensuite comme indiqué à l'exemple 1. Un volume de 24,8 $cm^3$ d'acide acétique est récupéré (98,8 % de la théorie). Le polymère obtenu est gris clair et d'aspect fibreux. La température d'écoulement est de 300° C. La plage d'anisotropie va de 300° C jusqu'à plus de 360° C. Les résultats des mesures de traction, de flexion et de choc sont indiqués dans le tableau 1 suivant.

TABLEAU 1

| EXEMPLE/ ESSAI | TRACTION Résistance MPa | TRACTION Module MPa | FLEXION Module MPa | CHOC CHARPY KJ/m² |
|---|---|---|---|---|
| A | 105 | 3330 | 7006 | 7,9 |
| 1 | 102 | 3165 | 10308 | 10,7 |
| 2 | 51 | 2849 | 9036 | 6,5 |
| 3 | 130 | 3290 | 9171 | 9,4 |

**Revendications**

1) Copolyesteramides aromatiques thermotropes conformables. caractérisés par les points suivants :
- ils comprennent des unités de récurrence de formules (I), éventuellement (II). (III) et (IV) :
(I) désignant la structure :

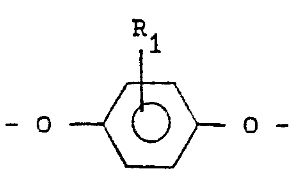

dans laquelle $R_1$ représente un radical méthyle ou éthyle ou un atome de chlore ou de brome, les unités (I) pouvant être identiques ou différentes entre elles,
(II) désignant la structure :

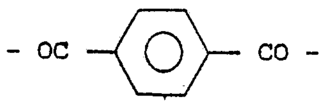

,

(III) désignant la structure :

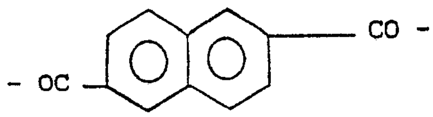

,

(IV) désignant la structure :

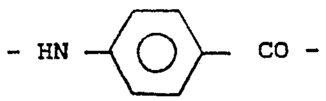

;

- le rapport molaire des unités (I) par rapport à la somme des unités (II) + (III) se situe dans l'intervalle allant de 0,95 à 1,05 ;
- la quantité des unités (II) dans le mélange (II) + (III) se situe dans l'intervalle allant de 0 à 80 % en mole et celle des unités (III), par rapport à la même référence, se situe dans l'intervalle allant de 100 à 20 % en mole ;
- la quantité des unités (IV), exprimée par rapport à la quantité des unités (I), se situe dans l'intervalle allant de 5 à 100 % en mole ;
- et ces copolyesteramides possèdent une température d'écoulement se situant dans l'intervalle allant de 200 à 350° C.

2) Copolyesteramides selon la revendication 1, caractérisés en ce qu'il présentent une structure dans laquelle :
- la quantité des unités (II) dans le mélange (II) + (III) se situe dans l'intervalle de 20 à 70 % en mole et celle des unités (III), par rapport à la même référence, va de 80 à 30 % en mole,
- et la quantité des unités (IV), exprimée par rapport à la quantité des unités (I), se situe dans l'intervalle allant de 10 à 60 % en mole.

3) Copolyesteramides selon la revendication 2, caractérisés en ce qu'ils présentent une structure dans laquelle les unités (I) sont identiques entre elles avec le substituant $R_1$ représentant un radical méthyle ou un atome de chlore.

4) Copolyesteramides selon l'une quelconque des revendications 1 à 3, caractérisés en ce qu'ils possèdent une température d'écoulement se situant dans l'intervalle allant de 260 à 330° C.

5) Copolyesteramides selon l'une quelconque des revendications 1 à 4, caractérisés en ce qu'ils contiennent en outre dans leur structure des unités aromatiques dioxy et/ou des unités aromatiques dicarbonyle et/ou des unités aromatiques mixtes amino secondaire/carbonyle ayant une structure autre que celle des unités (I), (II), (III) et (IV), la quantité totale de ces unités supplémentaires étant au plus égale à 10 % en mole par rapport à la quantité des unités (I).

6) Copolyesteramides selon la revendication 5, caractérisés en ce que les unités supplémentaires sont les unités :

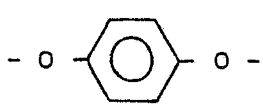

(I')

et/ou 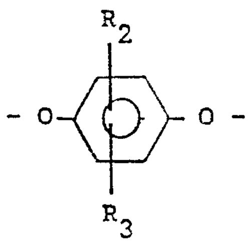 (I") où $R_2$ et $R_3$, qui peuvent être identiques ou différents, ont chacun la définition donnée dans la revendication 1 pour $R_1$, les unités (I") pouvant être identiques ou différentes entre elles,

et/ou 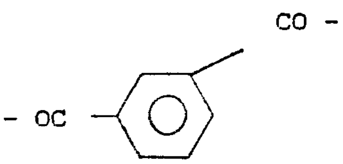 (II")

et/ou 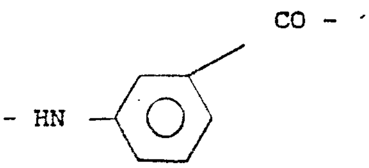 (IV')

7) Procédé pour l'obtention des copolyesteramides selon l'une quelconque des revendications 1 à 6, caractérisé par le fait que l'on fait réagir :
1. - un diester de méthyl - et/ou d'éthyl - et/ou de chloro - et/ou de bromohydroquinone en mélange éventuellement avec un (ou des) diester(s) d'un autre (ou d'autres) diphénol(s), avec
2. - éventuellement de l'acide téréphtalique pris seul ou en mélange éventuellement avec un autre diacide carboxylique aromatique et avec
3. - le dicarboxy-2,6 naphtalène, et avec
4. - un dérivé acylé de l'acide paraaminobenzoïque au niveau de la fonction amine, pris seul ou en mélange éventuellement avec un dérivé acylé du même type d'un autre aminoacide aromatique,
ledit diester de diphénol étant formé à partir d'un acide alcanoïque ayant de 2 à 6 atomes de carbone et ledit dérivé acylé d'aminoacide au niveau de la fonction amine étant formé à partir d'un anhydride ou d'un halogénure dérivé d'un acide alcanoïque ayant de 2 à 6 atomes de carbone,
les réactifs étant utilisés dans des proportions telles que :
- le rapport molaire diester(s) de diphénol(s)/diacides totaux se situe dans l'intervalle allant de 0,95 à 1,05,
- la quantité d'acide téréphtalique dans le mélange acide téréphtalique + dicarboxy-2,6 naphtalène se situe dans l'intervalle de 0 à 80 % en mole , et de préférence allant de 20 à 70 % en mole,
- la quantité de dérivé acylé d'acide paraaminobenzoïque au niveau de la fonction amine se situe dans l'intervalle allant de 5 à 100 % en mole par rapport à la quantité de diester(s) d'hydroquinone(s) monosubstituée(s), et de préférence allant de 10 à 60 % en mole,
- la quantité totale des réactifs engagés autres que le (ou les) diester(s) d'hydroquinone(s) monosubstituée(s), l'acide téréphtalique, le dicarboxy-2,6 naphtalène et le dérivé acylé de l'acide paraaminobenzoïque est au plus égale à 10 % en mole par rapport à la quantité de diester(s) d'hydroquinone(s) monosubstituée(s).

8) Procédé selon la revendication 7, caractérisé en ce que l'on utilise :
- au point 1., comme autre(s) diphénol(s), de l'hydroquinone non substituée et/ou une ou plusieurs hydroquinone(s) disubstituée(s) par les groupes méthyles et/ou éthyles et/ou chloro et/ou bromo,
- au point 2., comme autre diacide carboxylique aromatique, l'acide isophtalique,
- au point 4., comme autre aminoacide aromatique, l'acide métaaminobenzoïque.

9) Articles conformés tels que objets moulés, fils et films issus des copolyesteramides selon l'une quelconque des revendications 1 à 6.

**Revendications pour l'Etat contractant suivant: ES**

1) Procédé pour l'obtention de copolyesteramides aromatiques thermotropes conformables, caractérisé en ce que l'on fait réagir :
1. - la méthyl - et/ou l'éthyl - et/ou la chloro - et/ou la bromohydroquinone, en mélange éventuellement avec un autre (ou d'autres) diphénol(s), avec
2. - éventuellement un dérivé de l'acide téréphtalique pris seul ou en mélange éventuellement avec un dérivé d'un autre diacide carboxylique aromatique, et avec
3. - un dérivé du dicarboxy-2,6 naphatlène, et avec
4. - un dérivé de l'acide paraminobenzoïque au niveau de la focntion acide, pris seul ou en mélange éventuellement avec un dérivé du même type d'un autre aminoacide aromatique,
ledit dérivé d'acide étant soit un halogénure, soit un ester d'aryle,
ledit dérivé étant bien entendu un dihalogénure ou un diester dans le cas d'un diacide carboxylique,
les réactifs étant utilisés dans des proportions telles que :
- le rapport molaire diphénol(s)/dérivés de diacides se situe dans l'intervalle allant de 0,95 à 1,05,
- la quantité de dérivé d'acide téréphtalique dans le mélange dérivé d'acide téréphtalique + dérivé(s) du dicarboxy-2,6 naphtalène se situe dans l'intervalle allant de 0 à 80 % en mole, et de préférence allant de 20 à 70 % en mole,
- la quantité de dérivé d'acide paraaminobenzoïque se situe dans l'intervalle allant de 5 à 100 % en mole par rapport à la quantité d'hydroquinone(s) mono substituée(s), et de préférence allant de 10 à 60 % en mole,
- la quantité totale des réactifs engagés autres que le (ou les) hydroquinone(s) monosubstituée(s), le dérivé d'acide téréphtalique, le dérivé du dicarboxy-2,6 naphtalène et le dérivé d'acide paraminobenzoïque est au plus égale à 10 % en mole par rapport à la quantité d'hydroquinone(s) monosubstituée(s).

2) Procédé selon la revendication 1, caractérisé en ce que le dérivé d'acide est soit un chlorure, soit un ester de phényle, de tolyle ou de naphtyle.

3) Procédé pour l'obtention de copolyesteramides aromatiques thermotropes conformables, caractérisé en ce que l'on fait réagir :
1. - un diester de méthyl - et/ou d'éthyl - et/ou de chloro - et/ou de bromohydroquinone en mélange éventuellement avec un (ou des) diester(s) d'un autre (ou d'autres) diphénol(s), avec
2. - éventuellement de l'acide téréphtalique pris seul ou en mélange éventuellement avec un autre diacide carboxylique aromatique et avec
3. - le dicarboxy-2,6 naphatlène, et avec
4. - un dérivé acylé de l'acide paraaminobenzoïque au niveau de la fonction amine, pris seul ou en mélange éventuellement avec un dérivé acylé du même type d'un autre aminoacide aromatique,
ledit diester de diphénol étant formé à partir d'un acide alcanoïque ayant de 2 à 6 atomes de carbone et ledit dérivé acylé d'aminoacide au niveau de la fonction amine étant formé à partir d'un anhydride ou d'un halogénure dérivé d'un acide alcanoïque ayant de 2 à 6 atomes de carbone,
les réactifs étant utilisés dans des proportions telles que :
- le rapport molaire diester(s) de diphénol(s)/diacides totaux se situe dans l'intervalle allant de 0,95 à 1,05,
- la quantité d'acide téréphtalique dans le mélange acide téréphtalique + dicarboxy-2,6 naphtalène se situe dans l'intervalle de 0 à 80 % en mole , et de préférence allant de 20 à 70 % en mole,
- la quantité de dérivé acylé d'acide paraaminobenzoïque au niveau de la fonction amine se situe dans l'intervalle allant de 5 à 100 % en mole par rapport à la quantité de diester(s) d'hydroquinone(s) monosubstituée(s), et de préférence allant de 10 à 60 % en mole,
- la quantité totale des réactifs engagés autres que le (ou les) diester(s) d'hydroquinone(s) monosubstituée(s), l'acide téréphtalique, le dicarboxy-2,6 naphtalène et le dérivé acylé de l'acide paraaminobenzoïque est au plus égale à 10 % en mole par rapport à la quantité de diester(s) d'hydroquinone(s) monosubstituée(s).

4) Procédé selon la revendication 1 ou 3, caractérisé en ce que l'on utilise :
- au point 1., comme autre(s) diphénol(s), de l'hydroquinone non substituée et/ou une ou plusieurs hydroquinone(s) disubstituée(s) par les groupes méthyles et/ou éthyles et/ou chloro et/ou bromo,
- au point 2., comme autre diacide carboxylique aromatique, l'acide isophtalique,
- au point 4., comme autre aminoacide aromatique, l'acide métaaminobenzoïque.

5) Application des copolyesteramides aromatiques conformables préparés selon l'une quelconque des revendications 1 à 4 à la réalisation d'articles conformés tels qu'objets moulés, fils et films.

Office européen des brevets

# RAPPORT DE RECHERCHE EUROPEENNE

Numero de la demande

EP 88 42 0235

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 066 359 (CELANESE)<br>--- | | C 08 G 69/44 |
| A | EP-A-0 063 881 (CELANESE)<br>----- | | |
| | | | **DOMAINES TECHNIQUES RECHERCHES (Int. Cl.4)** |
| | | | C 08 G |

Le présent rapport a été établi pour toutes les revendications

| Lieu de la recherche | Date d'achèvement de la recherche | Examinateur |
|---|---|---|
| LA HAYE | 28-09-1988 | LEROY ALAIN |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)